**Europäisches Patentamt**

**European Patent Office**

**Office européen des brevets**

(19)

(11) Numéro de publication : **0 544 551 A1**

# (12) DEMANDE DE BREVET EUROPEEN

(21) Numéro de dépôt : **92402971.3**

(22) Date de dépôt : **03.11.92**

(51) Int. Cl.$^5$ : **G06K 9/38,** G06F 15/70, G06K 9/68

(30) Priorité : **15.11.91 FR 9114103**

(43) Date de publication de la demande :
**02.06.93 Bulletin 93/22**

(84) Etats contractants désignés :
**DE FR GB IT SE**

(71) Demandeur : **THOMSON-CSF**
**51, Esplanade du Général de Gaulle**
**F-92800 Puteaux (FR)**

(72) Inventeur : **Lecouvey, Jean-Paul**
**THOMSON-CSF, SCPI, 50, rue J.P.Timbaud**
**F-92402 Courbevoie Cedex (FR)**
Inventeur : **Catros, Jean-Yves**
**THOMSON-CSF, SCPI, 50, rue J.P.Timbaud**
**F-92402 Courbevoie Cedex (FR)**
Inventeur : **Burel, Gilles**
**THOMSON-CSF, SCPI, 50, rue J.P.Timbaud**
**F-92402 Courbevoie Cedex (FR)**

(74) Mandataire : **Benoit, Monique et al**
**THOMSON-CSF, SCPI, B.P. 329, 50, rue**
**Jean-Pierre Timbaud**
**F-92402 Courbevoie Cédex (FR)**

(54) **Procédé de mise en correspondance de graphes associés à des entités physiques, et ses applications au recalage d'images et à la reconnaissance de formes.**

(57) Le procédé de mise en correspondance de deux graphes associés à des entités physiques, les deux graphes comportant respectivement un nombre de noeuds N1 et N2 tels que N1 ≦ N2, consiste, par un processus d'optimisation, à modifier itérativement une fonction d'association notée F entre les noeuds des deux graphes de façon à minimiser, par approches successives, une fonction C (F) appelée fonction de coût de mise en correspondance et définie de manière à constituer une mesure d'erreur de l'association effectuée par la fonction d'association courante.

Application dans le domaine de l'analyse d'images et particulièrement au recalage d'images provenant de capteurs différents et à la reconnaissance de formes en trois dimensions.

FIG.8

EP 0 544 551 A1

L'invention se rapporte au domaine de l'analyse d'images et a plus particulièrement pour objet un procédé de mise en correspondance de graphes associés à des entités physiques, objets ou images notamment, et ses applications au recalage d'images et à la reconnaissance de formes.

De nombreuses applications utilisant l'analyse d'images visent à réaliser une mise en correspondance objet-modèle. Cette mise en correspondance peut être effectuée par l'intermédiaire de graphes. Cela peut être le cas par exemple pour le recalage d'images en provenance de capteurs différents : chaque image est segmentée, puis est représentée sous forme d'un graphe matérialisant les relations entre les zones résultant de la segmentation. La mise en correspondance des graphes associés aux images provenant des deux capteurs, l'une étant prise comme modèle et l'autre comme objet, permet alors d'identifier les paramètres de la transformation (rotation et translation) permettant de recaler les deux images.

Un autre exemple est la reconnaissance de formes en trois dimensions. Pour ce type d'applications, un système de prise de vues délivre des données en 3D relatives à l'objet analysé : ces données peuvent être par exemple un ensemble de lignes de contours de l'objet délivrées par un système d'analyse stéréoscopique. Ces données sont alors structurées sous forme d'un graphe. Parallèlement le modèle 3D de l'objet est également caractérisé par un graphe. La reconnaissance est obtenue lorsque le graphe de l'objet peut être mis en correspondance avec le graphe du modèle.

Les méthodes de mise en correspondance de graphes connues consistent à effectuer une mise en correspondance structurelle et nécessitent, pour obtenir une convergence en un temps raisonnable, que les graphes soient de faible taille, c'est-à-dire qu'ils ne comportent pas plus d'une dizaine de noeuds, et que l'on dispose d'une importante information symbolique associée aux noeuds et aux arcs reliant les noeuds, afin d'avoir un nombre limité de cas à examiner.

La difficulté majeure liée à l'utilisation de ces méthodes dans le domaine de l'analyse d'images vient du fait que les graphes ont généralement un grand nombre de noeuds et que la complexité de la mise en correspondance des graphes est d'autant plus élevée qu'il y a de noeuds dans les graphes.

L'invention a pour objet un procédé de mise en correspondance de deux graphes qui n'est pas une méthode structurelle, et qui permet de traiter des graphes de taille importante. La mise en correspondance des deux graphes est effectuée par un processus itératif d'optimisation qui consiste à modifier, à chaque itération, une fonction d'association entre les noeuds des deux graphes de façon à minimiser, par approches successives, une fonction, appelée fonction de coût de mise en correspondance, cette fonction de coût étant définie de manière à constituer une mesure d'erreur de l'association effectuée par la fonction d'association courante.

Le processus itératif permettant la minimisation de la fonction de coût est défini de façon à obtenir un minimum absolu et non un minimum local (les minima locaux sont très nombreux dans ce genre d'application).

Selon l'invention, le processus d'optimisation consiste :
- à définir une valeur initiale d'un paramètre T appelé température,
- à définir une loi de décroissance de la température,
- pour chaque température T, à minimiser, par approches successives, la fonction de coût C (F) en appliquant des perturbations élémentaires aléatoires à la fonction d'association F jusqu'à obtenir un équilibre statistique approché,
- à décider au moyen d'un test, si la valeur minimale C min de la fonction de coût obtenue à la température T considérée correspond au minimum global,
- si le test est négatif, à faire baisser la valeur de la température T et à calculer un nouvel équilibre statistique approché,
- si le test est positif, le minimum global est atteint et le processus d'optimisation est terminé.

Un autre objet de l'invention est l'utilisation de ce procédé dans un système de recalage d'images où les graphes représentent des données extraites des images à recaler.

Un dernier objet de l'invention est l'utilisation de ce procédé dans un système de reconnaissance de formes, l'un des graphes étant associé à un objet modèle en 3D, l'autre résultant de l'analyse d'images stéréoscopiques d'un objet à reconnaître.

D'autres particularités et avantages de l'invention apparaîtront clairement dans la description suivante, donnée à titre d'exemple non limitatif, faite en regard des figures annexées qui représentent :
- la figure 1 : un exemple de graphe,
- la figure 2 : un exemple de matrice de valuation associée à un graphe,
- les figures 3a et 3b : un exemple d'affectation de trois noeuds d'un graphe 1 à trois noeuds d'un graphe 2 respectivement avant et après avoir subi une perturbation élémentaire, dans le cas où les deux graphes sont isomorphes,
- la figure 4 : un exemple de deux graphes dont le premier est un sous-graphe complet du deuxième,
- les figures 5a et 5b : un exemple d'affectations de trois noeuds d'un graphe 1 à quatre noeuds d'un graphe 2 respectivement avant et après avoir subi une perturbation de deuxième type dans le cas où le premier graphe est un sous-graphe complet du deuxième graphe,
- la figure 6: un exemple de deux graphes, le premier graphe 1 étant un sous-graphe incomplet du deuxième graphe 2 et comportant un noeud "z" ne correspondant à aucun noeud du graphe 2,
- la figure 7 : un exemple de deux graphes, le premier graphe 1 étant un sous-graphe incomplet du deuxième graphe 2 et comportant un noeud "y" correspondant à deux noeuds du graphe 2.
- la figure 8: un organigramme du processus d'optimisation de la fonction de coût d'association entre deux graphes, selon l'invention.

La représentation d'une image sous forme de graphe est connue en soi et ne fait pas l'objet de la présente invention. Cependant, à titre d'exemple, supposons qu'une image représentant un paysage composé de plusieurs régions telles que le ciel, la végétation, les habitations, doive être représentée sous forme de graphe. Pour cela, une relation est définie entre les régions, résultant de la segmentation de l'image, cette relation pouvant être, par exemple, la condition qu'une région particulière soit située à côté d'une autre région. Un graphe associé à cette image est alors construit en affectant un noeud du graphe à chaque région du paysage et en reliant les noeuds qui sont associés aux régions en relation. Par exemple si deux régions notées 1 et 2 sont situées à côté l'une de l'autre, les noeuds 1 et 2, associés respectivement aux régions 1 et 2, sont reliés.

Un graphe est donc défini comme un ensemble de N noeuds en relation les uns avec les autres et peut être représenté par une matrice V de dimension N x N, appelée matrice de valuation, chaque élément $V(i, j)$ de la matrice représentant la valuation de l'arc reliant le noeud i au noeud j. A chaque noeud i peut être attribué un coefficient, appelé poids, qui est propre au noeud lui-même et qui est noté $P(i)$. Pour l'exemple d'image cité précédemment, le poids associé à un noeud déterminé peut correspondre par exemple à la valeur de la surface ou du périmètre de la région associée à ce noeud.

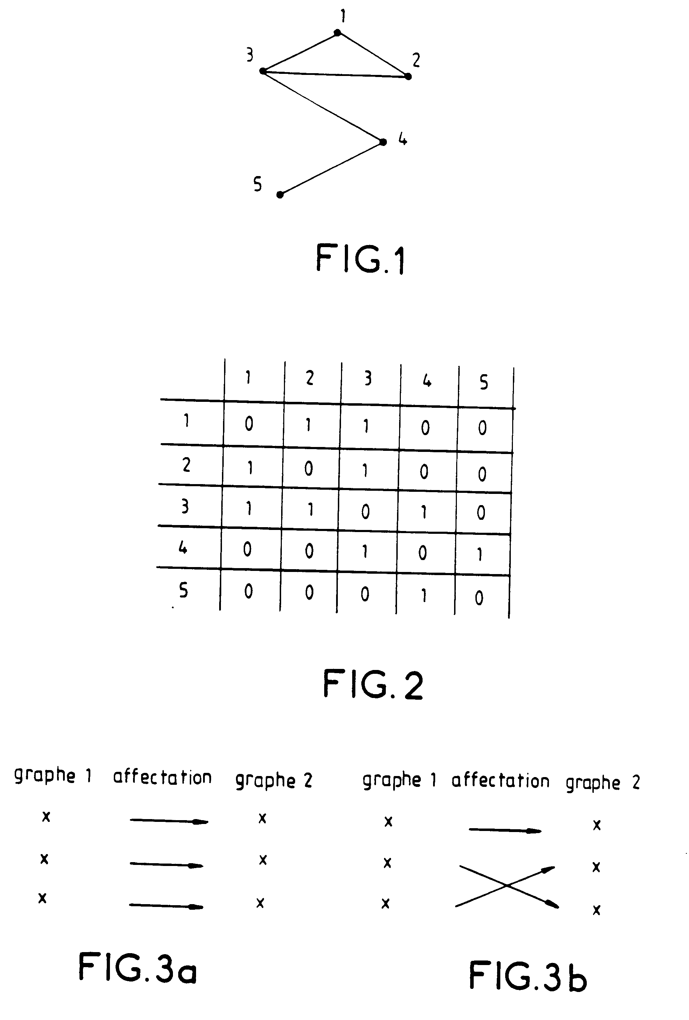

La figure 1 représente un exemple de graphe. Ce graphe comporte 5 noeuds, le noeud 1 étant relié aux noeuds 2 et 3, le noeud 2 étant relié aux noeuds 1, 2 et 4, le noeud 4 étant relié aux noeuds 3 et 5 et le noeud 5 étant relié au noeud 4.

La matrice de valuation V associée à ce graphe est représentée sur la figure 2. La valeur 1 est attribuée à un élément, noté $V(i, j)$, de la matrice de valuation si le noeud i est en relation avec le noeud j ; la valeur 0 est attribuée à cet élément dans le cas contraire.

Pour réaliser la mise en correspondance de deux images pouvant se mettre sous la forme de deux graphes , le procédé selon l'invention consiste à utiliser un processus d'optimisation utilisant un principe connu dans le domaine de la thermodynamique statistique, à savoir: lorsque la température d'un ensemble de particules en interaction baisse de façon suffisamment lente, cet ensemble de particules atteint un état d'énergie minimale.

Par analogie avec ce principe, l'ensemble des noeuds des deux graphes constitue l'ensemble des particules en interaction, l'interaction étant définie par une fonction d'association des noeuds des deux graphes. Cette fonction d'association est choisie arbitrairement au début du processus d'optimisation et ne correspond généralement pas à l'association optimale. Il est alors défini une fonction de coût d'association qui constitue une mesure de l'erreur de l'association effectuée par la fonction d'association.

Le processus d'optimisation consiste alors à faire baisser, progressivement et de manière contrôlée, la valeur d'un paramètre appelé "température du système", et pour chaque température, à minimiser, par approches successives, l'erreur d'association en appliquant des perturbations élémentaires aléatoires à la fonction d'association jusqu'à obtenir un équilibre statistique approché. Une perturbation consiste à changer l'affectation d'au moins un noeud quelconque du graphe 1. Les perturbations qui font baisser la valeur de la fonction de coût sont toujours acceptées, celles qui font augmenter la valeur de la fonction de coût sont acceptées avec une probabilité d'autant plus faible que la variation de coût est élevée et que la valeur de la température est faible.

La valeur de la température doit baisser de manière contrôlée pour que le processus d'optimisation converge vers le minimum global.

Dans la suite de la description, les deux graphes, notés graphe 1 et graphe 2, à mettre en correspondance, comprennent respectivement un nombre de noeuds N1 et N2 tels que N1 est inférieur ou égal à N2.

Une association donnée des noeuds du graphe 1 aux noeuds du graphe 2 est appelée "état du système". L'application d'une perturbation élémentaire au système correspond à une association différente des noeuds du graphe 1 aux noeuds du graphe 2 et donc à un changement d'état du système.

Pour mettre en oeuvre le processus d'optimisation, il faut au préalable définir une fonction de coût d'association entre les deux graphes et choisir une loi d'évolution de la fonction d'affectation, c'est-à -dire choisir un processus de génération des perturbations élémentaires. Pour cela, différents cas sont considérés. Les notations utilisées sont V1, V2 pour les matrices de valuation des graphes 1 et 2, $P_1$, $P_2$ pour les poids des noeuds des graphes 1 et 2, F pour la fonction d'affectation, Fi pour le noeud du graphe 2 affecté au noeud i du graphe 1.

Un premier cas concerne la mise en correspondance de deux graphes isomorphes comportant le même nombre de noeuds (N1 = N2 = N). La fonction de coût choisie est donnée par l'équation (1) suivante :

$$(1) \quad C(F) = \sum_{\substack{i \leq N1 \\ j \leq N1}} \left| V_1(i,j) - V_2(Fi,Fj) \right| + \sum_{i \leq N1} \left| P_1(i) - P_2(Fi) \right|$$

Cette fonction de coût constitue une mesure de l'erreur d'association qui tient compte d'une part de l'erreur commise sur la valuation des graphes et d'autre part, de l'erreur commise sur le poids des noeuds.

Dans ce cas, les perturbations élémentaires consistent à tirer au hasard deux noeuds du graphe 1 et à échanger leur affectation conformément aux figures 3a et 3b qui représentent respectivement les affectations de trois noeuds du graphe 1 à trois noeuds du graphe 2 avant et après avoir subi une perturbation élémentaire.

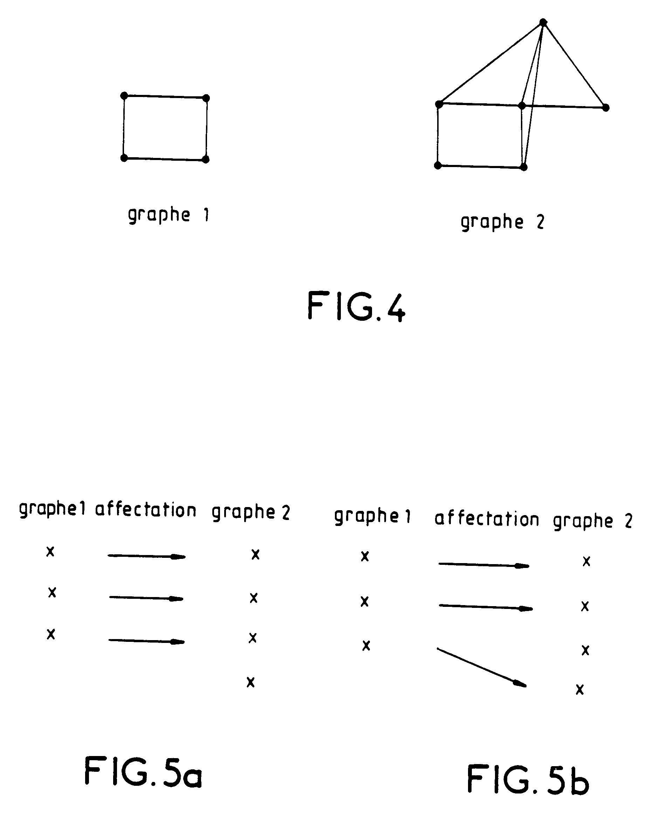

Un deuxième cas concerne la mise en correspondance d'un sous-graphe complet dans un graphe pour rechercher, par exemple, une petite image dans une grande image, la petite image étant entièrement comprise dans la grande image. La figure 4 représente un exemple de deux graphes dont le premier est un sous-graphe complet du deuxième. Le nombre de noeuds N1 du graphe 1 correspondant au sous-graphe est strictement inférieur au nombre de noeuds N2 du graphe 2. Certains noeuds du graphe 2 ne possèdent donc pas d'antécédent dans le graphe 1.

La fonction de coût choisie est identique à celle du premier cas concernant deux graphes isomorphes. Son expression est donnée par l'équation (1).

Dans ce cas, les perturbations élémentaires sont de deux types :

- un premier type de perturbation consiste à tirer au hasard deux noeuds du graphe 1 et à échanger leur affectation,
- un deuxième type de perturbation consiste à tirer au hasard un noeud du graphe 1 et un noeud du graphe 2 ne possédant pas d'antécédent dans le graphe 1, puis à affecter le noeud du graphe 1 à ce noeud du graphe 2 conformément aux figures 5a et 5b qui représentent respectivement les affectations des trois noeuds d'un graphe 1 aux quatre noeuds d'un graphe 2 avant et après avoir subi une perturbation de ce deuxième type.

Le choix d'effectuer une perturbation du premier ou du deuxième type peut par exemple être déterminé par le principe aléatoire suivant :

si le rapport du nombre de noeuds du graphe 1 au nombre de noeuds du graphe 2, N1/N2, est supérieur à une valeur choisie aléatoirement entre 0 et 1, alors la perturbation est du premier type. Dans le cas où N1/N2 est inférieur à cette valeur, alors la perturbation est du deuxième type.

Un troisième cas concerne la mise en correspondance d'un sous-graphe incomplet dans un graphe. Ce cas peut se présenter, par exemple, lorsqu'il y a une différence de cadrage entre les deux images à mettre en correspondance.

Dans ce cas deux possibilités peuvent coexister: certains noeuds du graphe 1 ne correspondent à aucun noeud du graphe 2 et/ou certains noeuds du graphe 1 correspondent à deux noeuds du graphe 2.

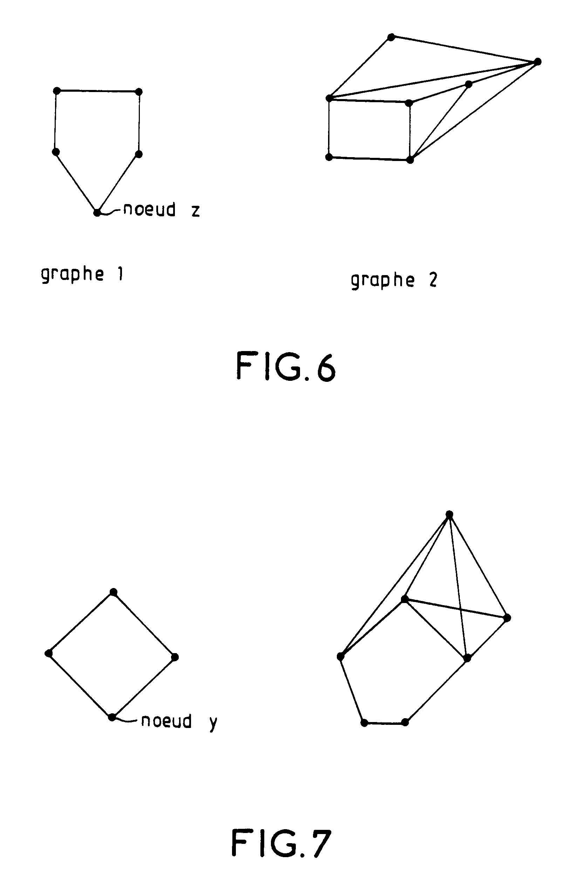

La figure 6 représente un exemple de deux graphes, le premier graphe 1 étant un sous-graphe incomplet du deuxième graphe 2 et comportant un noeud "z" ne correspondant à aucun noeud du graphe 2.

La figure 7 représente un exemple de deux graphes, le premier graphe 1 étant un sous-graphe incomplet du deuxième graphe 2 et comportant un noeud "y" correspondant à deux noeuds du graphe 2.

Pour rechercher un sous-graphe incomplet dans un graphe , si ce sous-graphe comporte un nombre de noeuds, noté NNA, qui ne correspondent à aucun noeud du graphe 2, la mise en correspondance de ces deux graphes est effectuée en deux phases de la manière décrite ci-après.

La première phase consiste à affecter tous les noeuds du graphe 1 aux noeuds du graphe 2 et à rechercher, en utilisant le processus d'optimisation, un sous-graphe complet dans un graphe en procédant de la même façon que pour le deuxième cas décrit ci-dessus. A l'issue de cette première phase, l'état optimal est atteint, et les noeuds du graphe 1 possédant un homologue dans le graphe 2 sont supposés correctement affectés. Les noeuds du graphe 1 n'ayant pas d'homologue dans le graphe 2 sont affectés à des noeuds quelconques du graphe 2. La phase suivante consiste donc à supprimer l'affectation des noeuds du graphe 1 qui n'ont pas d'homologue dans le graphe 2. Dans cette phase, le processus d'optimisation est de nouveau utilisé mais avec une expression différente de la fonction de coût de façon à faire intervenir une mesure d'erreur de non affectation des noeuds du graphe 1. La nouvelle expression de la fonction de coût C (F) est donnée par l'équation (2) suivante :

(2)

$$C(F) = \sum_{\substack{ij \leq N1 \\ \text{noeuds affectés}}} \left| V_1(i,j) - V_2(Fi,Fj) \right| + \sum_{\substack{i \leq N1 \\ \text{noeuds affectés}}} \left| P_1(i) - P_2(Fi) \right|$$

$$+ NNAC \cdot CNNA$$

Dans cette nouvelle expression de la fonction de coût, la mesure d'erreur d'affectation correspondant aux noeuds affectés est la même que celle utilisée pour le cas d'isomorphisme de graphes et le cas de recherche d'un sous-graphe complet dans un graphe. A cette mesure d'erreur est ajouté un terme supplémentaire NNAC. CNNA qui représente une mesure d'erreur de non affectation. Dans ce terme, NNAC représente le nombre de noeuds du graphe 1 non affectés courant, CNNA représente le coût de noeud non affecté.

Le coût de noeud non affecté est calculé en considérant tout d'abord que les graphes sont formés de valuations binaires (0 ou 1), symétriques, et ont une densité d'arc égale à d. Les probabilités d'avoir une valuation d'arc égale à 1, respectivement 0, pour deux noeuds i, j du graphe 1 et Fi, Fj du graphe 2 sont égales à d, respectivement à (1-d).

Dans ces conditions, le terme $\left| V_1(i,j) - V_2(Fi,Fj) \right|$ intervenant dans l'expression de la fonction de coût peut être considéré comme une variable aléatoire dont la valeur moyenne est égale à 2d (1-d).

En appliquant la théorie des graphes binaires pour calculer le coût optimal dans le cas où l'on ferait une affectation forcée de tous les noeuds, on obtient une somme de (N1-NNA) termes de valeur moyenne 2 NNA. d(1-d) correspondant aux (N1-NNA) noeuds possédant une affectation dans le graphe 2, et de NNA termes de valeur moyenne 2N1 d (1-d) correspondant aux NNA noeuds ne possédant pas d'homologue dans le graphe 2.

Par conséquent, pour des graphes binaires symétriques, lorsque la mise en correspondance des deux graphes par recherche d'un sous-graphe incomplet dans un graphe est effectuée, l'état optimal de mise en correspondance est atteint si, et seulement si, les NNA noeuds du graphe 1 ne possèdant pas d'homologue dans le graphe 2, et eux seuls, ne sont pas affectés. Cette condition se traduit par l'expression suivante, dans laquelle le coût de noeud non affecté est noté "CNNA" :

$$2\,NNA.d\,(1-d) \leqq CNNA \leqq 2\,N\,1.d\,(1-d)$$

Par exemple, la valeur de coût de noeud non affecté peut être choisie telle que :

$$CNNA = 2\alpha N\,1.d\,(1-d)$$

où $\alpha$ est un paramètre dont la valeur est comprise entre 0 et 1.

L'expression de coût de noeud non affecté ainsi obtenue, n'est applicable que pour des graphes binaires symétriques. Cependant, cette expression peut être généralisée à tous les types de graphes, en calculant le coût moyen du système lorsque toutes les perturbations sont acceptées. Pour les graphes binaires symétriques, ce coût moyen, noté "$\langle C\infty \rangle$", est la somme de $N1^2$ moyennes d'une variable aléatoire ayant pour moyenne 2d(1-d). Son expression est la suivante :

$$\langle C\infty \rangle = N_1^2 \cdot 2d\,(1-d) \text{ et on peut donc écrire :}$$

$$CNNA = \frac{\alpha \cdot \langle C\infty \rangle}{N1} avec\ 0 < \alpha < 1$$

Cette expression ne fait plus intervenir d. Elle peut donc être utilisée pour tous les types de graphes.

Dans ce cas, les perturbations élémentaires consistent à modifier légèrement la fonction d'affectation F de deux façons différentes. Un premier type de perturbation consiste à choisir au hasard un noeud i du graphe 1 couramment affecté à un noeud du graphe 2 et à supprimer son affectation. Un deuxième type de perturbation consiste à choisir au hasard un noeud j du graphe 1 sans affectation dans le graphe 2 et à affecter ce noeud j au noeud du graphe 2 auquel il était affecté avant sa non-affectation.

Le choix d'effectuer une perturbation du premier ou du deuxième type peut par exemple être déterminé par le principe aléatoire suivant : si la valeur d'une fonction aléatoire comprise entre 0 et 1 est inférieure à 0,5 alors la perturbation est du premier type. Dans le cas contraire, elle est du deuxième type.

Enfin, dans le cas le plus général, à savoir la recherche d'un sous-graphe incomplet de N1 noeuds dans un graphe de N2 noeuds, avec N1 $\leqq$ N2, tel que le graphe 1 comporte NNA noeuds sans correspondant dans le graphe 2 et NF noeuds correspondant chacun à deux noeuds du graphe 2, la mise en correspondance des noeuds des deux graphes se déroule en deux étapes de la façon suivante :

- La première étape consiste à effectuer une recherche d'un sous-graphe incomplet dans un graphe en procédant de la même façon que dans le troisième cas décrit ci-dessus. A l'issue de cette première étape, les noeuds du graphe 1 ayant un noeud correspondant simple dans le graphe 2 sont supposés correctement affectés. Les noeuds du graphe 1 sans homologue dans le graphe 2 ou correspondant à deux noeuds du graphe 2 sont supposés ne pas être affectés.
- La deuxième étape consiste alors à effectuer des fusions de noeuds dans le graphe 2. Pour cela, dans cette étape, le processus d'optimisation est de nouveau utilisé mais en acceptant toutes les perturbations qui font décroître la valeur de la fonction de coût et seulement ces perturbations.

La fonction de coût utilisée dans cette deuxième étape comporte un terme supplémentaire correspondant à une mesure d'erreur de fusions de noeuds. En notant NFC le nombre de noeuds fusionnés courant et CNF le coût de noeud fusionné, l'expression (3) de la fonction de coût est la suivante :

$$C(F) = \sum_{i,\,j\ noeuds\ affectés\ \leq N1} \left| V_1\ (i\ ,\ j) - V_2\ (Fi\ ,\ Fj) \right| + \sum_{i\ noeuds\ affectés\ \leq N1}$$

$$\left| P_1(i) - P_2(Fi) \right| + NNAC \cdot CNNA + NFC \cdot CNF$$

Les perturbations élémentaires sont effectuées de deux façons différentes :
- Un premier type de perturbation consiste à effectuer une fusion, c'est-à-dire à choisir au hasard un noeud i dans le graphe 1 sans affectation et à l'affecter à deux noeuds fusionnés du graphe 2.
- Un deuxième type de perturbation consiste à effectuer une séparation, c'est-à-dire à choisir au hasard un noeud dans le graphe 1 affecté à deux noeuds fusionnés dans le graphe 2 et à supprimer cette affectation.

Le choix d'effectuer une perturbation du premier ou du deuxième type peut par exemple être déterminé par le même principe aléatoire que dans le cas du calcul du coût de noeud non affecté, c'est-à-dire : si la valeur d'une fonction aléatoire comprise entre 0 et 1 est inférieure à 0,5 alors la perturbation est du premier type. Dans le cas contraire, elle est du deuxième type.

La fonction de coût d'association entre deux graphes étant définie, le processus d'optimisation de cette fonction de coût peut être mis en oeuvre.

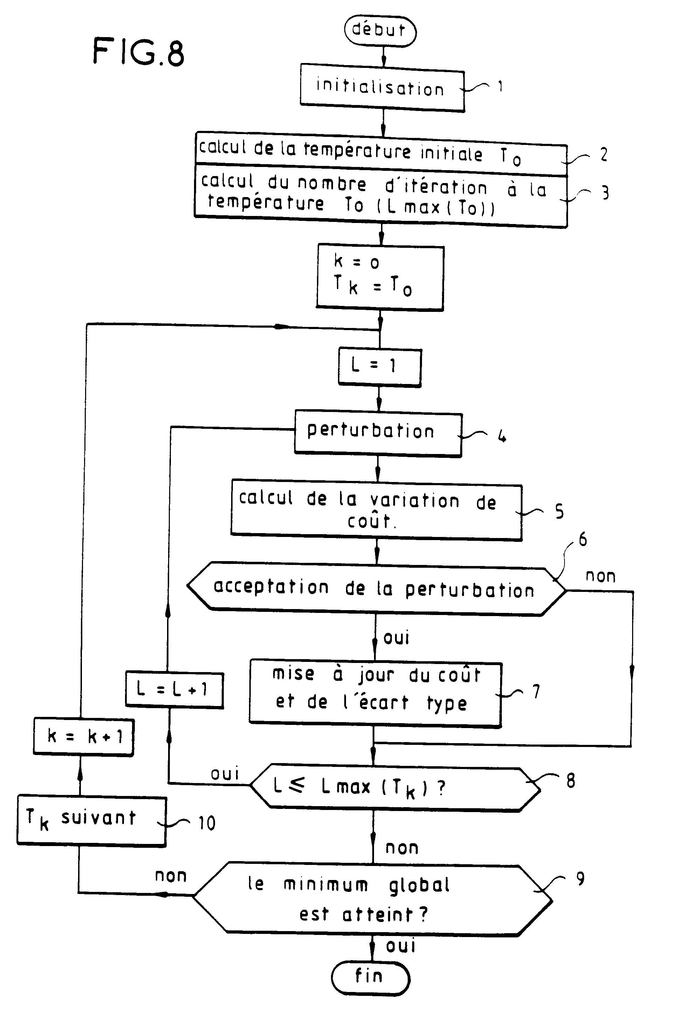

La figure 8 représente un organigramme du processus d'optimisation de la fonction de coût d'association entre deux graphes.

Dans une première étape, 1, est effectuée l'initialisation des paramètres du processus et des affectations des noeuds du premier graphe aux noeuds du deuxième graphe.

Dans une étape 2, est effectué le calcul de la température initiale To du processus d'optimisation. Cette température To est choisie de façon à ce que la variation de la valeur moyenne du coût entre une température, dite "température infinie", et la température initiale To soit proportionnelle à l'écart type de la fonction de coût obtenu à la température infinie. Le système est dit évoluant à température infinie lorsque toutes les perturbations sont acceptées, même si elles font croître la valeur du coût d'affectation. Pour calculer la température initiale To, des perturbations élémentaires sont effectuées, chaque perturbation consistant à changer l'affectation d'un ou plusieurs noeuds du graphe 1. Après chaque perturbation, le coût d'affectation est calculé. Toutes les perturbations sont acceptées, même si elles font croître la valeur du coût d'affectation, de façon à ce que l'état initial du système soit aléatoire. Le nombre de perturbations effectué à cette température infinie est fixé arbitrairement, par exemple il peut être considéré que cinq mille perturbations sont suffisantes. La température initiale To est alors obtenue en calculant l'écart type $\sigma_o$ de la fonction de coût à température infinie et en divisant cet écart type par la valeur d'un paramètre "a" qui est un nombre réel compris entre zéro et quelques unités :

$$To = \sigma_o / a$$

L'écart type $\sigma 0$ est défini de la manière suivante :

$$\sigma_o^2 = \langle C^2 \rangle - \langle C \rangle^2$$

où $\langle C \rangle$ représente la valeur moyenne de la fonction de coût.

Les étapes 3 à 8 consistent pour une température $T_k$ donnée, à rechercher un équilibre statistique approché en un nombre d'itérations optimisé suivant la dispersion des valeurs de la fonction de coût pour des perturbations successives.

L'étape 3 consiste à calculer le nombre d'itérations optimal. Si la variation de coût est faible, il est inutile d'effectuer un grand nombre d'itérations car les valeurs de la fonction de coût sont voisines. Dans le cas où les valeurs de la fonction de coût sont dispersées, l'écart type est important. Il convient alors d'effectuer un grand nombre de perturbations afin d'explorer les différents états possibles. Etant donné que les perturbations qui font augmenter la valeur de la fonction de coût C sont acceptées avec une probabilité p d'autant plus faible que la variation de coût $\Delta C$ est élevée et que la température $T_k$ est faible, le nombre d'essais à tenter pour accepter une telle perturbation est inversement proportionnel à cette probabilité. Par exemple, la probabilité d'acceptation suivante peut être utilisée :

$$P = exp\ (-\ \Delta C/T_k)$$

ou encore:

$$p = exp\ (-\ b\ \sigma(T_k)/T_k)$$

où $\sigma(T_k)$ est l'écart type de la fonction de coût à la température $T_k$ et b est un paramètre dont la valeur est comprise entre 0 et 1.

Dans ces conditions, le nombre d'itérations optimal Lmax à température $T_k$ peut être choisi de la façon suivante :

$$L\ max = A\ exp\ (b\ \sigma(T_k)\ /T_k)$$

où A est un coefficient de proportionnalité proportionnel au nombre de noeuds N1 du graphe 1. Par exemple, $A = n.\ N1$ où $n$ est un nombre entier inférieur ou égal à 10.

En fait, l'écart type de la fonction de coût ne pouvant être calculé que sur un grand nombre d'itérations, la valeur de L max est calculée en prenant la valeur de l'écart type obtenue à la dernière itération effectuée à la température précédente. Ainsi :

$$L\ max\ (T_k) = A\ exp\ (b\ \sigma\ (T_{k-1})\ /T_k)$$

Pour calculer Lmax $(T_o)$, on utilise l'écart type à température infinie.

L'évolution du système à température constante est effectuée dans les étapes 4 à 8, pour des valeurs de L variant de 1 à L max. Cette évolution se déroule de la façon suivante : dans l'étape 4, une perturbation est effectuée, cette perturbation correspondant à un changement d'affectation d'au moins un noeud quelconque du graphe 1. Dans l'étape 5, le calcul de la variation de coût correspondant à cette perturbation est effectué. Dans une étape 6, est effectué un test permettant d'accepter ou non la perturbation. Si la variation de coût $\Delta C$ est négative, la perturbation est acceptée car elle correspond à une diminution de la fonction de coût. Si la variation de coût $\Delta C$ est positive, la perturbation est acceptée avec la probabilité p choisie, cette probabilité étant d'autant plus faible que la variation de coût $\Delta C$ est élevée et que la valeur de la température est faible.

La loi d'acceptation de la perturbation choisie est la suivante :

Si la probabilité p d'accepter la perturbation est supérieure à une valeur aléatoire comprise entre 0 et 1, alors la perturbation est acceptée. Dans le cas contraire, la perturbation est refusée. Pour qu'une perturbation soit acceptée, il faut donc que l'une des conditions suivantes soit remplies :

$$\Delta C \leqq 0$$
$$\text{ou } \Delta C > 0 \text{ et } exp\ (-\ \Delta C\ /\ T_k) > random\ [0,1]$$

L'étape 7 ne concerne que le cas où la perturbation est acceptée. Cette étape consiste à mettre à jour la valeur de la fonction de coût C et la valeur de l'écart type $\sigma(T_k)$.

Enfin, l'étape 8 est un test dans lequel la valeur de L est comparée avec la valeur de L max $(T_k)$. Si L est inférieure à L max $(T_k)$, la valeur de L est incrémentée et les étapes 4 à 8 sont répétées. Lorsque L a atteint la valeur optimale L max $(T_k)$ un test est effectué dans une étape 9. Ce test détermine si la valeur minimale du coût obtenue depuis le début du processus d'optimisation correspond au minimum global. Ce minimum global doit vérifier la relation définie ci-dessous :

$$\frac{\langle C\ (T_k)\rangle - Cmin}{\langle C\ (T\infty)\rangle - Cmin} \leqq \varepsilon$$

Dans cette relation $\langle C(T_k)\rangle$ et $\langle C(T\infty)\rangle$ correspondent respectivement à la valeur moyenne de la fonction de coût obtenue à la température $(T_k)$ et à la température infinie, C min correspond à la plus petite valeur obtenue pour la fonction de coût depuis le début du processus d'optimisation, $\varepsilon$ est un paramètre à régler suivant la précision souhaitée ; par exemple, la valeur de $\varepsilon$ peut être comprise entre 0,01 et 0,001. Si le minimum global est atteint, le processus d'optimisation est terminé ; dans le cas contraire, une nouvelle température, inférieure à la précédente, est calculée dans une étape 10. La loi de décroissance de la température est choisie de façon à ce que la température décroisse très vite au début du processus d'optimisation lorsque la température est élevée et l'écart type est élevé, et de plus en plus lentement au fur et à mesure que la valeur de la fonction de coût minimale se rapproche du minimum global.

Par exemple, la loi de décroissance peut être la suivante :

$$T_{k+1} = T_k\ exp\ \left(-\ \frac{d\ T_k}{\sigma\ (T_k)}\right)$$

où d est un paramètre dont la valeur est comprise entre 0,1 et 1.

Les étapes 3 à 9 sont alors répétées avec cette nouvelle température jusqu'à ce que le minimum global soit atteint.

Dans cet organigramme, la fonction de coût utilisée est celle qui est définie par l'expression (1) si les graphes à mettre en correspondance appartiennent au premier ou au deuxième cas considérés, ou par l'une des expressions (2) ou (3) selon que les graphes à mettre en correspondance appartiennent au troisième ou au dernier cas considéré.

Ce processus d'optimisation peut être utilisé tel qu'il est décrit ci-dessus, cependant il est possible de limiter l'espace de recherche du coût optimal sans limiter la puissance de l'algorithme d'optimisation en effectuant un traitement préliminaire permettant de tenir compte du poids des noeuds. Ce traitement préliminaire consiste à définir une fonction de coût auxiliaire Ca qui ne tient compte que du poids des noeuds et à minimiser cette fonction de coût Ca en utilisant le processus d'optimisation et en laissant évoluer le système à température nulle, c'est-à-dire en n'acceptant que les perturbations qui font baisser la valeur de la fonction de coût Ca. Par exemple, la fonction de coût auxiliaire peut être la suivante :

$$Ca\,(F) = \sum_{i \,\leq\, N1} \left| P_1\,(i) - P_2\,(F\,i) \right|$$

où $P_1$ et $P_2$ sont les poids des noeuds des graphes 1 et 2 et F est la fonction d'affectation.

A l'issue de ce traitement préliminaire, chaque noeud i du graphe 1 est affecté à un noeud j du graphe 2 de poids voisin de celui du noeud i.

Le processus d'optimisation de la fonction de coût définie par les expressions (1), (2) ou (3) est ensuite mis en oeuvre en choisissant comme affectations initiales des noeuds du graphe 1, les affectations obtenues par le traitement préliminaire et en imposant aux perturbations élémentaires de respecter la contrainte de n'affecter entre eux que des noeuds de poids voisins.

Ainsi, dans le cas de l'isomorphisme de graphes, deux noeuds i et j du graphe 1 sont choisis au hasard jusqu'à ce que la différence de leurs poids en valeur absolue $\left| P_1\,(i) - P_1\,(j) \right|$ soit inférieure ou égale à une valeur du même ordre de grandeur que la valeur des poids. Les deux noeuds i et j sont alors considérés comme ayant des poids voisins et leurs affectations peuvent être échangées.

L'invention n'est pas limitée aux exemples précisément décrits, notamment les choix de la fonction de coût et des perturbations peuvent être différents.

Le procédé décrit ci-dessus est particulièrement bien adapté aux applications dans le domaine de l'analyse d'images. Par exemple son utilisation au recalage d'images issues de sources différentes est particulièrement intéressante. En effet, les images segmentées peuvent se traduire lors de la structuration des données extraites sous la forme de graphes, par des nombres de noeuds et d'arcs quelconques dont seul l'ensemble permet une caractérisation complète de l'image.

L'avantage du procédé selon l'invention est de considérer l'ensemble du graphe.

De la même manière l'utilisation de ce procédé dans un système de reconnaissance de formes est particulièrement intéressante. En effet l'objet "modèle" est directement décrit par un graphe, dont comme précédemment, le nombre de noeuds et d'arcs peut être quelconque. L'image (pour un objet plan) ou les images résultant d'un dispositif d'analyse stéréoscopique (pour un objet 3D) sont traduite (s) sous forme d'un graphe qui est alors globalement comparé au graphe de l'objet modèle.

L'invention n'est pas limitée aux utilisations du procédé de mise en correspondance de graphes décrites ci-dessus. Elle est applicable dans le domaine de l'analyse d'images à toute utilisation dans laquelle un objet modèle et des données associées à entités physiques où doit être reconnu l'objet peuvent être représentés sous forme de graphes.

## Revendications

1. Procédé de mise en correspondance de deux graphes associés à des entités physiques, les deux graphes comportant respectivement un nombre de noeuds N1 et N2 tels que N1 $\leq$ N2, caractérisé en ce qu'il consiste, par un processus d'optimisation, à modifier itérativement une fonction d'association notée F entre les noeuds des deux graphes de façon à minimiser, par approches successives, une fonction C (F) appelée fonction de coût de mise en correspondance et définie de manière à constituer une mesure d'erreur de l'association effectuée par la fonction d'association courante.

2. Procédé selon la revendication 1, caractérisé en ce que le processus d'optimisation consiste :
   - à définir une valeur initiale d'un paramètre T appelé température,
   - à définir une loi de décroissance de la température,
   - pour chaque température T, à minimiser, par approches successives, la fonction de coût C (F) en appliquant des perturbations élémentaires aléatoires à la fonction d'association F jusqu'à obtenir un équilibre statistique approché,
   - à décider au moyen d'un test, si la valeur minimale C min de la fonction de coût obtenue depuis le début du processus d'optimisation correspond au minimum global,
   - si le test est négatif, à faire baisser la valeur de la température T et à calculer un nouvel équilibre statistique approché,
   - si le test est positif, le minimum global est atteint et le processus d'optimisation est terminé.

3. Procédé selon la revendication 2, caractérisé en ce que pour mettre en correspondance deux graphes 1 et 2 isomorphes comportant un nombre de noeuds N1 égal à N2, les noeuds ayant des poids notés respectivement $P_1$ et $P_2$ pour les graphes 1 et 2, les graphes 1 et 2 étant respectivement représentés par des matrices, dites de "valuation", respectivement notées $V_1$ et $V_2$, d'une part, la fonction de coût C (F) constituant une mesure d'erreur d'association est donnée par l'équation suivante :

$$C(F) = \sum_{\substack{i \leq N1 \\ j \leq N1}} \left| V_1(i, j) - V_2(Fi, Fj) \right| + \sum_{i \leq N1} \left| P_1(i) - P_2(Fi) \right|$$

où i, j sont deux noeuds du graphe 1, Fi et Fj sont les noeuds du graphe 2 affectés respectivement aux noeuds i et j du graphe 1 ; d'autre part, les perturbations élémentaires consistent à tirer au hasard deux noeuds du graphe 1 et à échanger leur affectation.

4. Procédé selon la revendication 2, caractérisé en ce que pour mettre en correspondance un sous-graphe complet comportant N1 noeuds avec un graphe comportant N2 noeuds, tels que N2 > N1 et tels que certains noeuds du graphe 2 ne comportent pas d'antécédent dans le graphe 1, d'une part, la fonction de coût C (F) est donnée par l'équation suivante :

$$C(F) = \sum_{\substack{i \leq N1 \\ j \leq N1}} \left| V_1(i, j) - V_2(Fi, Fj) \right| + \sum_{i \leq N1} \left| P_1(i) - P_2(Fi) \right|$$

d'autre part, les perturbations élémentaires sont effectuées de deux façons différentes dont la première consiste à tirer au hasard deux noeuds du graphe 1 et à échanger leur affectation, et la deuxième consiste à tirer au hasard un noeud du graphe 1 et un noeud du graphe 2 ne possédant pas d'antécédent dans le graphe 1, puis à affecter le noeud du graphe 1 à ce noeud du graphe 2.

5. Procédé selon les revendications 2 et 4, caractérisé en ce que pour mettre en correspondance un sous-graphe 1 incomplet comportant N1 noeuds avec un graphe 2 comportant N2 noeuds, tels que N1 < N2, le sous-graphe 1 comportant NNA noeuds qui ne correspondent à aucun noeud du graphe 2,
   - dans une première phase, tous les noeuds du graphe 1 sont affectés aux noeuds du graphe 2 et le processus d'optimisation est utilisé une première fois pour mettre en correspondance un sous-graphe complet avec un graphe,
   - dans une deuxième phase, l'affectation des noeuds du graphe 1 qui ne correspondent à aucun noeud du graphe 2 est supprimée en utilisant le processus d'optimisation une deuxième fois avec d'une part, une fonction de coût différente dont l'expression est la suivante :

$$C(F) = \sum_{\substack{ij \le N1 \\ \text{noeuds affectés}}} \left| V_1(i,j) - V_2(Fi,Fj) \right| + \sum_{\substack{i \le N1 \\ \text{noeuds affectés}}} \left| P_1(i) - P_2(Fi) \right|$$

$$+ NNAC \cdot CNNA$$

où NNAC représente le nombre de noeuds du graphe 1 non affectés courant, CNNA représente le coût des noeuds non affectés, et d'autre part, des perturbations effectuées de deux façons différentes, la première façon consistant à choisir au hasard un noeud i du graphe 1 couramment affecté à un noeud du graphe 2 et à supprimer son affectation, la deuxième façon consistant à choisir au hasard un noeud j du graphe 1 sans affectation dans le graphe 2 et à affecter ce noeud j au noeud du graphe 2 auquel il était affecté avant sa non-affectation.

6. Procédé selon la revendication 5, caractérisé en ce que le graphe 1 comporte en outre NF noeuds correspondant chacun à deux noeuds du graphe 2 et en ce que la mise en correspondance comporte une étape supplémentaire qui consiste à effectuer des fusions de noeuds dans le graphe 2 en utilisant de nouveau le processus d'optimisation avec une fonction de coût dont l'expression est la suivante :

$$C(F) = \sum_{i,j \text{ noeuds affectés} \le N1} \left| V_1(i,j) - V_2(Fi,Fj) \right| + \sum_{i \text{ noeuds affectés} \le N1}$$

$$\left| P_1(i) - P_2(Fi) \right| + NNAC \cdot CNNA + NFC \cdot CNF$$

et en effectuant des perturbations élémentaires de deux façons différentes, la première façon consistant à effectuer une fusion en choisissant au hasard un noeud i dans le graphe 1 sans affectation et en l'affectant à deux noeuds fusionnés du graphe 2, la deuxième façon consistant à effectuer une séparation en choisissant au hasard un noeud dans le graphe 1 affecté à deux noeuds fusionnés dans le graphe 2 et à supprimer cette affectation.

7. Utilisation du procédé de mise en correspondance de graphes selon l'une quelconque des revendications précédentes dans un système de recalage d'images, comportant des moyens de segmentation des images issues de deux sources différentes, des moyens de structuration des données extraites par segmentation de chaque image en un graphe, les paramètres de la transformation caractérisant le recalage des images résultant de la mise en correspondance des graphes.

8. Utilisation du procédé de mise en correspondance de graphes, selon l'une quelconque des revendications 1 à 6 dans un système de reconnaissance de forme, comportant des moyens de caractérisation d'une forme dite modèle par un premier graphe, des moyens de structuration de données issues d'au moins une image de l'objet en un second graphe, la reconnaissance du modèle étant obtenue par la mise en correspondance des deux graphes.

9. Utilisation selon la revendication 8, caractérisée en ce que, pour une reconnaissance de formes en trois dimensions, le second graphe résulte de la structuration des données issues d'images délivrées par un dispositif d'analyse stéréoscopique.

## FIG.1

|   | 1 | 2 | 3 | 4 | 5 |
|---|---|---|---|---|---|
| 1 | 0 | 1 | 1 | 0 | 0 |
| 2 | 1 | 0 | 1 | 0 | 0 |
| 3 | 1 | 1 | 0 | 1 | 0 |
| 4 | 0 | 0 | 1 | 0 | 1 |
| 5 | 0 | 0 | 0 | 1 | 0 |

## FIG.2

graphe 1    affectation    graphe 2         graphe 1   affectation   graphe 2

## FIG.3a

## FIG.3b

graphe 1

graphe 2

# FIG.4

graphe1 affectation  graphe 2

x     ⟶     x

x     ⟶     x

x     ⟶     x

           x

graphe1   affectation   graphe 2

x     ⟶     x

x     ⟶     x

x          ⟶ x

           x

# FIG.5a

# FIG.5b

noeud z

graphe 1

graphe 2

# FIG.6

noeud y

# FIG.7

# FIG.8

```
                              ( début )
                                 │
                                 ▼
                    ┌─────────────────────┐
                    │    initialisation   │───  1
                    └─────────────────────┘
                                 │
                                 ▼
        ┌─────────────────────────────────────────┐
        │ calcul de la température initiale  To    │───  2
        ├─────────────────────────────────────────┤
        │ calcul du nombre  d'itération  à la      │───  3
        │ température  To ( L max ( To ))          │
        └─────────────────────────────────────────┘
                                 │
                                 ▼
                       ┌───────────────┐
                       │   k = o       │
                       │   Tk = To     │
                       └───────────────┘
                                 │
                                 ▼
                          ┌──────────┐
                          │  L = 1   │
                          └──────────┘
                                 │
                                 ▼
                     ┌────────────────────┐
                     │    perturbation    │───  4
                     └────────────────────┘
                                 │
                                 ▼
              ┌────────────────────────────────┐
              │ calcul de la variation  de     │───  5
              │            coût.               │
              └────────────────────────────────┘
                                 │
                                 ▼
         ┌──────────────────────────────────────────┐        non
         ⟨   acceptation  de la  perturbation        ⟩─────────────┐
         └──────────────────────────────────────────┘              │
                                 │ oui                             │
                                 ▼                                 │
                     ┌──────────────────────────┐                 │
                     │  mise  à jour  du coût    │───  7          │
                     │  et de l'écart  type      │                 │
                     └──────────────────────────┘                 │
                                 │◄────────────────────────────────┘
                                 ▼
                ┌──────────────────────────────┐
    oui         ⟨     L ≤  Lmax ( Tk ) ?       ⟩───  8
  ┌─────────────└──────────────────────────────┘
  │                              │ non
  │                              ▼
  │             ┌──────────────────────────────────┐
  │   non       ⟨      le  minimum  global          ⟩───  9
  │ ┌───────────⟨        est atteint ?              ⟩
  │ │           └──────────────────────────────────┘
  │ │                            │ oui
  │ │                            ▼
  │ │                        ( fin )
```

$L = L + 1$

$k = k + 1$

$T_k$ suivant ─── 10

Office européen
des brevets

**RAPPORT DE RECHERCHE EUROPEENNE**

Numero de la demande

EP    92 40 2971

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | IEEE TRANSACTIONS ON PATTERN ANALYSIS AND MACHINE<br>vol. 7, no. 5, Septembre 1985, NEW YORK US<br>pages 599 - 609<br>ANDREW K.C. WONG ET AL. 'Entropy and distance of random graphs with application to structural pattern recognition'<br>* page 605, colonne de droite * | 1 | G06K9/38<br>G06F15/70<br>G06K9/68 |
| A |  | 2 | |
| | --- | | |
| A | APPLIED OPTICS.<br>vol. 26, no. 10, 15 Mai 1986, NEW YORK US<br>pages 1845 - 1851<br>LINDA G. SHAPIRO ET AL. 'Relational matching'<br>* page 1847, colonne de gauche, ligne 17 - page 1848, colonne de gauche * | 1 | |
| | --- | | |
| A | EP-A-0 226 507 (THOMSON-CGR)<br>* page 7 * | 1 | |
| | ----- | | **DOMAINES TECHNIQUES RECHERCHES (Int. Cl.5)**<br><br>G06K<br>G06F |

Le présent rapport a été établi pour toutes les revendications

| Lieu de la recherche | Date d'achèvement de la recherche | Examinateur |
|---|---|---|
| LA HAYE | 19 FEVRIER 1993 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)